# EUROPEAN PATENT APPLICATION

(11) **EP 4 793 035 A1**
(43) Date of publication of application: **19.08.2026**
(21) Application number: 25197598.3
(22) Date of filing: 22.08.2025
(51) Int. Cl.: B32B 7/022, B32B 3/02, B32B 15/08, B32B 15/085, B32B 27/28, B32B 27/32

(54) **BATTERY PROTECTION PLATE, BATTERY PACK, AND VEHICLE**

(30) Priority: 14.02.2025 CN 202510168809
(71) Applicant: Xiaomi EV Technology Co., Ltd., Beijing 100176 (CN)
(72) Inventor: CHEN, Jun, Beijing, 100176 (CN); QIN, Yawen, Beijing, 100176 (CN); CHEN, Haiyun, Beijing, 100176 (CN); XING, Yubing, Beijing, 100176 (CN); LV, Baofeng, Beijing, 100176 (CN)
(74) Representative: Stöckeler, Ferdinand

(57) **Abstract**

A battery protection plate (100), a battery pack, and a vehicle are provided, which relate to the technical field of battery packs. The battery protection plate (100) includes a base layer (1) and an energy-absorbing layer (2). The energy-absorbing layer (2) is arranged on a side of the base layer (1). A tensile strength and an elastic modulus of the base layer (1) are greater than a tensile strength and an elastic modulus of the energy-absorbing layer (2), and an elongation at break of the energy-absorbing layer (2) is greater than an elongation at break of the base layer (1).

## Description

### TECHNICAL FIELD

The present invention relates to the technical field of battery packs, and in particular, to a battery protection plate, a battery pack, and a vehicle.

### BACKGROUND OF THE INVENTION

As the most crucial component in new energy vehicles, the safety and the reliability of the battery pack determine the quality of these vehicles. A battery protection plate is arranged at the bottom of the battery pack to safeguard the battery cells inside. Consequently, the protective strength of the battery protection plate is of vital importance to the safety of the battery pack. However, existing battery protection plates are prone to damage and penetration upon impact, indicating that their protective strength needs to be enhanced.

### SUMMARY OF THE INVENTION

The invention is set out in the appended set of claims.

The present invention provides a battery protection plate, a battery pack, and a vehicle, which can improve the impact resistance of the battery protection plate.

An aspect of the present invention provides a battery protection plate, including:
a base layer; and
an energy-absorbing layer arranged on a side of the base layer;
where a tensile strength and an elastic modulus of the base layer are greater than a tensile strength and an elastic modulus of the energy-absorbing layer, and an elongation at break of the energy-absorbing layer is greater than an elongation at break of the base layer.

Optionally, the tensile strength of the base layer is at least 100 MPa.

Optionally, the elongation at break L1 of the energy-absorbing layer is at least 30%.

Optionally, a ratio Q1/L1 of the tensile strength Q1 of the base layer to the elongation at break L1 of the energy-absorbing layer satisfies: 0.16 MPa/% ≤ Q1/L1 ≤ 100 MPa/%.

Optionally, a ratio H1/H2 of a thickness H1 of the base layer to a thickness H2 of the energy-absorbing layer satisfies: 0.25 < H1/H2 < 6.

Optionally, the thickness H1 of the base layer ranges from 0.6 mm to 2 mm.

Optionally, the thickness H2 of the energy-absorbing layer ranges from 0.5 mm to 3 mm.

Optionally, a Rockwell hardness of the base layer is at least 25 HRC.

Optionally, the base layer includes metal.

Optionally, the energy-absorbing layer includes ultra-high molecular weight polyethylene.

Optionally, the battery protection plate further includes an impact layer, where the impact layer is arranged on a side of the base layer away from the energy-absorbing layer; a compressive strain rate of the impact layer is greater than a compressive strain rate of the base layer and is greater than a compressive strain rate of the energy-absorbing layer.

Optionally, a ratio V1/H3 of the compressive strain rate V1 of the impact layer to a thickness H3 of the impact layer satisfies: 66 (mm*s)^-1 ≤ V1/H3 ≤ 10000 (mm*s)^-1.

Optionally, the compressive strain rate V1 of the impact layer is at least 200 s^-1.

Optionally, a ratio Y1/Q2 of a Rockwell hardness Y1 of the base layer to an adhesion strength Q2 between the base layer and the impact layer satisfies: 1 HRC/MPa ≤ Y1/Q2 ≤ 57 HRC/MPa.

Optionally, a product H3*H2 of a thickness H3 of the impact layer and a thickness H2 of the base layer satisfies: 0.3 mm^2 ≤ H3*H2 ≤ 6 mm^2.

Optionally, the thickness H3 of the impact layer ranges from 0.5 mm to 3 mm.

Optionally, an adhesion strength Q2 between the base layer (1) and the impact layer (3) is at least 3 MPa.

Optionally, the impact layer includes a polyurea material.

Optionally, the base layer has a body portion and a flange portion located at an outer periphery of the body portion and bent to the energy-absorbing layer, where the flange portion is configured to connect with a battery pack case; an attachment area of the energy-absorbing layer on the base layer is within the range of the body portion.

Optionally, the base layer has a body portion and a flange portion located at an outer periphery of the body portion and bent to the energy-absorbing layer; an attachment area of the impact layer on the base layer is located at least at the body portion and at the flange portion.

Another aspect of the present invention provides a battery pack including the battery protection plate according to any one of the foregoing, the energy-absorbing layer being located on a side of the base layer facing the interior of the battery pack.

A further aspect of the present invention provides a vehicle including the battery pack according to any one of the foregoing.

When the battery protection plate of the present invention is installed in a battery pack, the energy-absorbing layer can be arranged at the inner side of the battery pack, i.e., the side closer to the battery cell. The tensile strength and elastic modulus of the base layer are relatively greater compared to that of the energy-absorbing layer, which can provide support and ensure that the battery protection plate has sufficient strength to control the overall deformation of the battery protection plate under impact. When the battery protection plate is subjected to an impact, due to the relatively higher elongation at break of the energy-absorbing layer, it can undergo tensile deformation to absorb a significant amount of energy, thus reducing the impact energy received by the base layer. This allows the base layer to deform adequately without being prone to fracture.

It should be understood that both the foregoing general description and the following detailed description are exemplary and explanatory only and are not restrictive of the present invention.

### BRIEF DESCRIPTION OF DRAWINGS

The accompanying drawings, which are incorporated in and constitute a part of this specification, illustrate example embodiments consistent with the present invention, and together with the specification, serve to explain the principles of the present invention. Obviously, the drawings in the following description are merely some embodiments of the present invention, and for those of ordinary skill in the art, other drawings can also be obtained according to these drawings, on the premise of paying no creative effort.
FIG. 1 is a schematic diagram of an example of a battery protection plate according to an example of the present invention.
FIG. 2 is a schematic diagram of another example of a battery protection plate according to an example of the present invention.
FIG. 3 is a schematic diagram of a stress deformation area in an example of a battery protection plate according to an example of the present invention.
FIG. 4 is an exploded schematic diagram of an example of a battery protection plate according to an example of the present invention.
FIG. 5 is a schematic diagram of an example of a battery pack of the present invention.

### Description of reference signs

100, battery protection plate; 200, battery pack case; 300, upper cover; 1, base layer; 2, energy-absorbing layer; 3, impact layer; 11, body portion; 12, flange portion.

### DETAILED DESCRIPTION OF THE INVENTION

Examples will now be described more fully with reference to the accompanying drawings. Examples may, however, be implemented in many forms and should not be construed as limited to the examples set forth here. Rather, these examples are provided so that the present invention will be thorough and complete, and the concept of the examples will be fully conveyed to those skilled in the art. Like reference signs in the drawings denote the same or similar structures, and thus detailed descriptions will be omitted. Furthermore, the drawings are merely schematic illustrations of the present invention and are not necessarily drawn to scale.

Unless otherwise specified or indicated, technical or scientific terms used in the present invention shall have the ordinary meaning as understood by those of ordinary skill in the art to which the present invention belongs. The terms "a," "an," "the," "said," and "at least one" are used to indicate that one or more elements/components/etc. are present; the terms "including" and "having" are used to denote an open-ended inclusion and mean that there may be additional elements/components/etc. other than the listed elements/components/etc.; the terms "first" and "second" are used merely as labels, and do not limit the number or importance or order of their objects.

As used here, the term "part A is arranged on part B" may mean that the part A is connected in direct contact with the part B, or may mean that the part A is arranged on part C, and the part C is arranged on the part B.

Furthermore, in the present invention, azimuthal terms such as "inner/outer," "thickness," and the like are used only to denote the relative positional relationship. For example, for convenience, it is defined according to the positions and states of the battery pack and the vehicle in actual operation, or the orientation with respect to the schematic placement of the components in the drawings. For example, taking a battery protection plate located at a bottom of the battery pack as an example, a top surface of the battery protection plate is closer to a battery cell and is an "inner side"; a bottom surface of the battery protection plate is closer to an external environment and is an "outer side." The direction between the top surface and the bottom surface of the battery protection plate is a thickness direction of the battery protection plate and each layer structure constituting the battery protection plate. It should be understood that these directional terms are relative concepts that may vary accordingly depending on the orientation in which the battery pack and vehicle are placed.

During the operation of new energy vehicles equipped with battery packs, collisions or underbody scrapes may cause mechanical damage to the battery pack. This can lead to phenomena such as electrolyte leakage, thermal runaway of a battery cell, or internal short circuits, ultimately resulting in battery pack failure. In severe cases, it may even cause the battery pack to catch fire or explode, leading to casualties. Thus, the impact resistance of the battery protection plate needs to be enhanced.

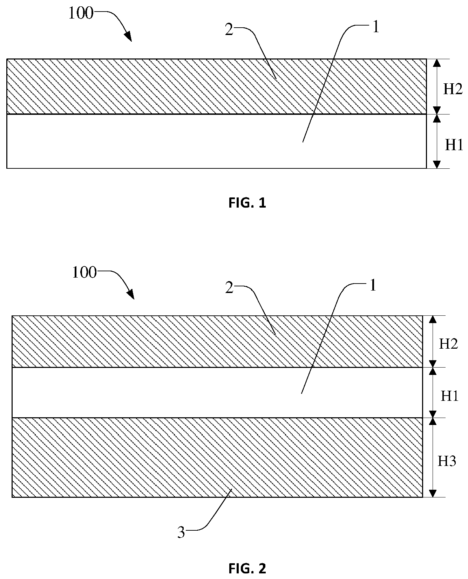

The present invention provides a battery protection plate 100, as shown in FIG. 1, including a base layer 1 and an energy-absorbing layer 2, the energy-absorbing layer 2 being arranged on a side of the base layer 1; a tensile strength and an elastic modulus of the base layer 1 are greater than a tensile strength and an elastic modulus of the energy-absorbing layer 2, and an elongation at break of the energy-absorbing layer 2 is greater than an elongation at break of the base layer 1.

When the battery protection plate 100 of the present invention is installed in a battery pack, the energy-absorbing layer 2 can be arranged at an inner side of the battery pack, i.e., the side closer to the battery cell. The tensile strength and elastic modulus of the base layer 1 are relatively greater compared to the energy-absorbing layer 2, which can provide support and ensure that the battery protection plate 100 has sufficient strength to control the overall deformation of the battery protection plate 100 under impact. When the battery protection plate 100 is subjected to an impact, due to the relatively higher elongation at break of the energy-absorbing layer 2, it can undergo tensile deformation to absorb a significant amount of energy, thus reducing the impact energy received by the base layer 1. This allows the base layer 1 to deform adequately without being prone to fracture.

The base layer 1 possesses relatively greater tensile strength and elastic modulus, which can ensure the overall structure and strength of the battery protection plate 100. For example, the tensile strength of the base layer 1 is at least 100 MPa. For example, the tensile strength of the base layer 1 ranges from 100 MPa to 3000 MPa. The elastic modulus of the base layer 1 ranges from 190 GPa to 210 GPa. For example, a Rockwell hardness of the base layer 1 is at least 25 HRC to ensure that the base layer 1 is not prone to fracture when subjected to impact. For example, the Rockwell hardness of the base layer 1 ranges from 25 HRC to 170 HRC. Another example is that the Rockwell hardness of the base layer 1 ranges from 40 HRC to 170 HRC.

In an example, the base layer 1 includes a steel plate. For instance, the base layer 1 can include high-strength steel, advanced high-strength steel, or ultra-high-strength hot-formed steel. Steel plates such as HS1300, HS1800, or those with even higher strength can be selected. The base layer 1 can also include high-strength aluminum alloy, for example, the 7-series aluminum alloy.

In an example, results of the influence of different ratios Q1/L1 of the tensile strength Q1 of the base layer 1 to the elongation at break L1 of the energy-absorbing layer 2 on the impact resistance and airtightness performance, are shown in Table 1. In Embodiments 1 to 6, except for the performance parameters of the base layer 1 and the energy-absorbing layer 2, all other experimental conditions are the same. In Embodiments 1 to 3, the base layer 1 is made of 1 mm hot-formed steel, with different strengths Q1. In Embodiment 4, the base layer 1 is made of 0.8 mm hot-formed steel. In Embodiment 5, the base layer 1 is made of 3 mm aluminum alloy. In Embodiment 6, the base layer 1 is made of a 3 mm SMC composite material. In Embodiments 1 to 6, the energy-absorbing layer 2 is made of 1 mm ultra-high molecular weight polyethylene, with different elongations at break L1. The adhesion strength between the base layer 1 and the energy-absorbing layer 2 in each embodiment is 5 MPa. The sealing test standard is IP68, and the airtightness is tested using the flow-rate method. During the process where the inflation pressure reaches 5 kPa, the pressure is maintained for 60s, and the detection is carried out for 60s, the airtightness performance is considered qualified if the leakage is lower than or equal to 14 ccm; otherwise, it is unqualified.

**Table 1**

| Embodiment | Tensile strength Q1 (MPa) of base layer 1 | Elongation at break L1 (%) of energy-absorbing layer 2 | Q1/L1 (MPa/%) | Impact Resistance (J) | Airtightness performance |
|---|---|---|---|---|---|
| Embodiment 1 | 2200 | 20 | 110 | 750 | Unqualified |
| Embodiment 2 | 2200 | 30 | 73.33 | 800 | Qualified |
| Embodiment 3 | 2000 | 60 | 33.33 | 700 | Qualified |
| Embodiment 4 | 1500 | 60 | 25 | 550 | Qualified |
| Embodiment 5 | 100 | 600 | 0.17 | 120 | Qualified |
| Embodiment 6 | 80 | 600 | 0.13 | 100 | Qualified |

In an example of the present invention, the ratio Q1/L1 of the tensile strength Q1 of the base layer 1 to the elongation at break L1 of the energy-absorbing layer 2 satisfies: 0.16 MPa/% ≤ Q1/L1 ≤ 100 MPa/%. This allows for a balance between the impact resistance and puncture resistance of the battery protection plate 100. The greater tensile strength Q1 of the base layer 1 leads to better impact resistance, while the greater elongation at break L1 of the energy-absorbing layer 2 results in improved puncture resistance and airtightness of the battery protection plate 100. When Q1/L1 is less than 0.16 MPa/%, as in Embodiment 6 in Table 1, the base layer 1 has relatively low strength and weak impact resistance. When Q1/L1 is greater than 100 MPa/%, as in Embodiment 1 in Table 1, the elongation at break L1 of the energy-absorbing layer 2 is relatively low. The battery protection plate 100 is prone to cracking and overall penetration upon impact, leading to airtightness failure. Alternatively, if the base layer 1 has extremely high strength (generally, the higher the strength of the base layer 1, the lower its elongation at break), the battery protection plate 100 is also prone to overall penetration, leading to airtightness failure. In some examples, the ratio Q1/L1 of the tensile strength Q1 of the base layer 1 to the elongation at break L1 of the energy-absorbing layer 2 satisfies: 1 MPa/% ≤ Q1/L1 ≤ 100 MPa/%.

For example, the elongation at break L1 of the energy-absorbing layer 2 is at least 30%. When subjected to an impact, the energy-absorbing layer 2 undergoes tensile deformation to absorb energy, which is beneficial for protecting the battery protection plate 100 from being breached under extreme impact conditions. For instance, the elongation at break L1 of the energy-absorbing layer 2 can range from 30% to 600%. The energy-absorbing layer 2 can include materials such as Ultra-High Molecular Weight Polyethylene (UHMWPE), Polypropylene (PP), or aramid fibers. The base layer 1 can include a steel plate, with the elongation at break ranging from 5% to 20%. The elongation at break of the energy-absorbing layer 2 is greater than the elongation at break of the base layer 1 to ensure that the energy-absorbing layer 2 can absorb the impact energy received by the base layer 1. In an example, the elongation at break L1 of the energy-absorbing layer 2 can range from 30% to 100%, balancing the energy-absorbing capacity of the energy-absorbing layer 2 under deformation, the structural strength, and the cost.

For example, the adhesion strength between the base layer 1 and the energy-absorbing layer 2 is at least 3 MPa. This ensures the coordinated deformation of the base layer 1 and the energy-absorbing layer 2, preventing the base layer 1 and the energy-absorbing layer 2 from deforming and separating under the impact force. For example, the surface of the base layer 1 used for attaching the energy-absorbing layer 2 is polished and coated with a primer, such as an epoxy primer, to enhance the adhesion strength of the energy-absorbing layer 2 on the base layer 1 and improve the rust-prevention capability of the battery protection plate 100. For example, the adhesion strength of the base layer 1 to the energy-absorbing layer 2 ranges from 3 MPa to 25 MPa.

In an example of the present invention, a ratio H1/H2 of a thickness H1 of the base layer 1 to a thickness H2 of the energy-absorbing layer 2 is greater than 0.25 and less than 6. In this example, the thicknesses and mechanical properties of the base layer 1 and the energy-absorbing layer 2 are well-coordinated. The base layer 1 undergoes large-area deformation to absorb a significant amount of energy, which is then transmitted to the energy-absorbing layer 2. The energy-absorbing layer 2 absorbs a relatively large amount of energy through stretching, gradually reducing the energy transferred to the base layer 1 and allowing the base layer 1 to deform sufficiently without fracturing. When H1/H2 is greater than or equal to 6, the energy-absorbing layer 2 is relatively too thin compared to the base layer 1, making it unable to effectively absorb the impact energy from the base layer 1. As a result, the overall impact resistance of the battery protection plate 100 is only marginally improved. When H1/H2 is less than or equal to 0.25, the base layer 1 is relatively too thin compared to the energy-absorbing layer 2. On the one hand, as the base material, an excessively thin base layer 1 may lead to insufficient overall strength of the battery protection plate 100. On the other hand, when subjected to an impact, the base layer 1 may directly fracture or undergo severe deformation, preventing the energy-absorbing layer 2 from effectively exerting its energy-absorbing function. In some examples, the ratio H1/H2 of the thickness H1 of the base layer 1 to the thickness H2 of the energy-absorbing layer 2 is greater than 0.5 and less than 2.5.

In an example, the thickness H1 of the base layer 1 may be 0.5 mm to 3 mm to balance the strength of the base layer 1 and the overall weight of the battery protection plate 100. The thickness H2 of the energy-absorbing layer 2 may be 0.5 mm to 3 mm. For example, the thickness H1 of the base layer 1 and the thickness H2 of the energy-absorbing layer 2 may be equal.

In an example, the thickness H1 of the base layer 1 may range from 0.6 mm to 2 mm. For example, the thickness H1 of the base layer 1 may range from 0.8 mm to 1.2 mm, and the thickness H2 of the energy-absorbing layer 2 may range from 0.5 mm to 1.5 mm, with the thickness of the energy-absorbing layer 2 being matched to the thickness and strength of the base layer 1.

In an example of the present invention, as shown in FIG. 2, the battery protection plate 100 further includes an impact layer 3. The impact layer 3 is arranged on a side of the base layer 1 that is away from the energy-absorbing layer 2. A compressive strain rate of the impact layer 3 is greater than a compressive strain rate of the base layer 1 and is greater than a compressive strain rate of the energy-absorbing layer 2.

When installing the battery protection plate 100 of this example onto a battery pack, the energy-absorbing layer 2 can be mounted on the inner side of the battery pack, that is, the side closer to the battery cell. The impact layer 3 is located on the outer side of the battery pack, namely, the side closer to the external environment. The compressive strain rate of the impact layer 3 is higher than those of the base layer 1 and the energy-absorbing layer 2. When the battery protection plate 100 is subjected to an impact, the impact layer 3 can rapidly disperse the impact force from the point of impact to the surrounding areas, effectively increasing the force-bearing area. This reduces the energy per unit area on the base layer 1 and is beneficial for enhancing the impact resistance of the battery protection plate 100.

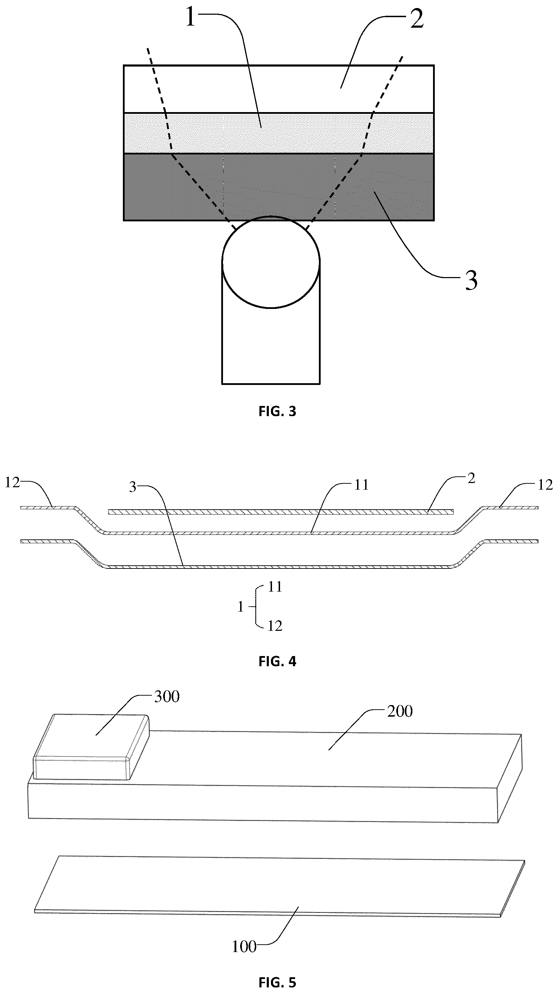

Referring to the schematic diagram of the stress deformation area of a battery protection plate 100 shown in FIG. 3, this example employs a layered structure with the impact layer 3, the base layer 1, and the energy-absorbing layer 2 stacked from the outside to the inside. This arrangement is conducive to leveraging the characteristics of each layer and achieving inter-layer synergistic effects. The outermost impact layer 3 absorbs the first wave of energy and expands the force-bearing area of the middle base layer 1. With an enlarged force-bearing area, the base layer 1 is less prone to fracture, which in turn ensures that the impact layer 3 attached to the base layer 1 is also less prone to fracture, creating a positive interaction. The innermost energy-absorbing layer 2 absorbs a relatively large amount of energy through stretching, gradually reducing the energy received by the base layer 1. This allows the base layer 1 to deform sufficiently without fracturing, further promoting the inter-layer synergistic effects and enhancing the impact resistance of the battery protection plate 100.

For example, the compressive strain rate V1 of the impact layer 3 is at least 200s^-1, ensuring that the impact layer 3 has good scratch resistance and is not easily damaged by scratching.

In an example, results of the influence of different ratios V1/H3 of the compression strain rate V1 of the impact layer 3 to the thickness H3 of the impact layer 3 on the anti-impact performance and wear resistance, are shown in Table 2. In Embodiments 7 to 11, all experimental conditions are identical except for the performance parameters of the impact layer 3. In each example, the base layer 1 is made of a 1.0 mm thick HS1800 hot-formed steel plate, and the energy-absorbing layer 2 is made of 1.0 mm thick ultra-high molecular weight polyethylene. The adhesion strength of the base layer 1 to the energy-absorbing layer 2 is 5 MPa, while the adhesion strength of the base layer 1 to the impact layer 3 is 8 MPa. The wear resistance is characterized by the scratch force required to move a 1 mm scratch tip from the surface of the impact layer 3 to the base layer 1.

**Table 2**

| Embodiment | Compressive strain rate V1 (s^-1) of impact layer 3 | Thickness H3 (mm) of impact layer 3 | V1/H3 ((mm*s)^-1) | Impact resistance (J) | Wear resistance (Scratch force) |
|---|---|---|---|---|---|
| Embodiment 7 | 100 | 5 | 20 | 800 | 30 |
| Embodiment 8 | 200 | 3 | 66.6 | 750 | 100 |
| Embodiment 9 | 1000 | 2 | 500 | 700 | 500 |
| Embodiment 10 | 5000 | 0.5 | 10000 | 400 | 1000 |
| Embodiment 11 | 5000 | 0.4 | 12500 | 300 | 900 |

In an example of the present invention, the ratio V1/H3 of the compressive strain rate V1 of the impact layer 3 to the thickness H3 of the impact layer 3 satisfies: 66 (mm*s)^-1 ≤ V1/H3 ≤ 10000 (mm*s)^-1, thus enabling the battery protection plate 100 to achieve a balance between scratch resistance and impact resistance. A greater compression strain rate V1 of the impact layer 3 leads to better scratch resistance, while a greater thickness H3 of the impact layer 3 enhances the impact resistance of the battery protection plate 100. Referring to Embodiment 7 in Table 2, when V1/H3 is less than 66 (mm*s)^-1, the compressive strain rate V1 of the impact layer 3 is relatively low, resulting in weaker scratch resistance; alternatively, if the thickness H3 is excessively high, the space utilization efficiency in the thickness direction of the battery protection plate 100 is reduced. When V1/H3 exceeds 10000 (mm*s)^-1, as seen in Embodiment 11 in Table 2, the thickness of the impact layer 3 is relatively low, or the compressive strain rate V1 of the impact layer 3 is excessively high, leading to poorer impact resistance.

For example, the compression strain rate V1 of the impact layer 3 can be 200 s^-1 to 5000 s^-1, and it is not prone to fracture upon impact. For example, the impact layer 3 may include a polyurea material. The polyurea material exhibits excellent impact resistance and scratch resistance, and has the advantage of being easy to repair after scratching. In some examples, the impact layer 3 may include the polyether-ether-ketone material.

In an example, results of the influence of different ratios Y1/Q2 of the Rockwell hardness Y1 of the base layer 1 to an adhesion strength Q2 between the base layer 1 and the impact layer 3 on impact resistance and deformation resistance, are shown in Table 3. In Embodiments 12 to 16, all experimental conditions are identical except for the Rockwell hardness Y1 of the base layer 1 and the adhesion strength Q2 between the impact layer 3 and the base layer 1. In all embodiments, the energy-absorbing layer 2 is made of 1.0 mm ultra-high molecular weight polyethylene, and the impact layer 3 is a 2 mm polyurea coating. In Embodiment 12, the base layer 1 is made of a 5 mm glass fiber and resin woven composite material; in Embodiment 13, the base layer 1 is made of a 3 mm high-strength aluminum alloy; in Embodiment 14, the base layer 1 is made of 1 mm hot-formed steel; and in Embodiments 15 and 16, the base layer 1 is made of a 5 mm ceramic material. In Embodiments 12 to 16, the adhesion strength of the base layer 1 to the energy-absorbing layer 2 is consistently 5 MPa.

**Table 3**

| Embodiment | Rockwell hardness Y1 (HRC) of base layer 1 | Adhesion strength Q2 (MPa) of impact layer 3 to base layer 1 | Y1/Q2 (HRC/MPa) | Impact resistance (J) | Deformation resistance (mm) |
|---|---|---|---|---|---|
| Embodiment 12 | 20 | 25 | 0.8 | 300 | 30 |
| Embodiment 13 | 25 | 25 | 1 | 450 | 25 |
| Embodiment 14 | 55 | 8 | 6.9 | 700 | 18 |
| Embodiment 15 | 170 | 3 | 57 | 300 | 5 |
| Embodiment 16 | 170 | 2 | 85 | 250 | 5 |

In an example of the present invention, the ratio Y1/Q2 of the Rockwell hardness Y1 of the base layer 1 to the adhesion strength Q2 between the base layer 1 and the impact layer 3 satisfies: 1 HRC/MPa ≤ Y1/Q2 ≤ 57 HRC/MPa, so that impact resistance and deformation resistance of the battery protection plate 100 can be balanced. The higher the Rockwell hardness Y1 of the base layer 1, the smaller the deformation amount of the base layer 1 is; the higher the adhesion strength Q2 between the base layer 1 and the impact layer 3, the better the impact resistance of the battery protection plate 100 is. When Y1/Q2 is less than 1 HRC/MPa, the Rockwell hardness Y1 of the base layer 1 is relatively low, the adhesion strength Q2 of the base layer 1 to the impact layer 3 is relatively high, and the deformation resistance of the battery protection plate 100 is relatively poor. For example, referring to Embodiment 12, the deformation amount is significantly higher than that in Embodiment 15, and the impact resistance is also lower than that in Embodiment 13. When Y1/Q2 is greater than 57 HRC/MPa, the Rockwell hardness Y1 of the base layer 1 is relatively high, the adhesion strength Q2 of the base layer 1 to the impact layer 3 is relatively low, and the impact resistance is relatively poor. For example, referring to Embodiment 16, the impact resistance is lower than that in Embodiments 13 to 15.

For example, the adhesion strength Q2 of the base layer 1 to the impact layer 3 is at least 3 MPa. In an example, the adhesion strength Q2 of the base layer 1 to the impact layer 3 is at least 5 MPa. For example, the adhesion strength Q2 of the base layer 1 to the impact layer 3 ranges from 5 MPa to 25 MPa. For example, the surface of the base layer 1 that is used for attaching the impact layer 3 is polished and coated with a primer, such as an epoxy primer, to enhance the adhesion strength of the impact layer 3 on the base layer 1 and improve the rust resistance of the battery protection plate 100. For example, the surface of the base layer 1 that is used for attaching the impact layer 3 undergoes electrophoretic treatment to enhance the adhesion strength of the impact layer 3 on the base layer 1 and improve the rust resistance of the battery protection plate 100.

In an example, results of the influence of the relationship between the thickness H3 of the impact layer 3 and the thickness H2 of the base layer 1 on impact resistance and weight, are shown in Table 4. In Embodiments 17 to 21, all experimental conditions are identical except for the thicknesses of the base layer 1 and the impact layer 3. In all embodiments, the base layer 1 is made of an HS1800 hot-formed steel plate, the energy-absorbing layer 2 is made of 1.0 mm ultra-high molecular weight polyethylene, and the impact layer 3 is a polyurea coating. The adhesion strength of the base layer 1 to the energy-absorbing layer 2 is 5 MPa, and the adhesion strength of the base layer 1 to the impact layer 3 is 8 MPa.

**Table 4**

| Embodiment | Thickness H3 (mm) of impact layer 3 | Thickness H2 (mm) of base layer 1 | H3*H2 (mm^2) | Impact resistance (J) | Weight (kg) |
|---|---|---|---|---|---|
| Embodiment 17 | 0.5 | 0.5 | 0.25 | 100 | 4.43 |
| Embodiment 18 | 0.5 | 0.6 | 0.3 | 250 | 5.21 |
| Embodiment 19 | 2 | 1 | 2 | 700 | 9.85 |
| Embodiment 20 | 3 | 2 | 6 | 1000 | 18.7 |
| Embodiment 21 | 3 | 3 | 9 | 1300 | 26.55 |

In an example of the present invention, the product H3*H2 of the thickness H3 of the impact layer 3 and the thickness H2 of the base layer 1 satisfies: 0.3 mm^2 ≤ H3*H2 ≤ 6 mm^2, so that the impact resistance and the weight of the battery protection plate 100 can be balanced. The greater the thickness H3 of the impact layer 3, the better the impact resistance of the battery protection plate 100 is, and the greater the thickness H2 of the base layer 1, the heavier the weight of the battery protection plate 100 is. When H3*H2 is less than 0.3 mm^2, referring to Embodiment 17, the thickness H2 of the base layer 1 or the thickness H3 of the impact layer 3 is relatively small, and the overall impact resistance of the battery protection plate 100 is relatively poor; when H3*H2 is greater than 6 mm^2, referring to Embodiment 21, the thickness H2 of the base layer 1 or the thickness H3 of the impact layer 3 is relatively great, and the overall weight of the battery guard plate 100 is relatively heavy. In an example of the present invention, the thickness H3 of the impact layer 3 ranges from 0.5 to 3 mm. For example, the thickness H3 of the impact layer 3 is 2 mm.

In an example of the present invention, single-layer ball impact tests are conducted on the base layer 1, the energy-absorbing layer 2, and the impact layer 3 of the battery protection plate 100, respectively. Additionally, a ball impact test is conducted on the entire battery protection plate 100, which is composed of the base layer 1, the energy-absorbing layer 2, and the impact layer 3 with identical parameters. The results are presented in Table 5 and Table 6. The impact resistance performance is characterized by the impact energy derived from converting the maximum impact height at which the test subject can withstand impact without cracking. The experimental equipment used for the ball impact tests is a conical iron mass weighing 26.5 kg, with a contact end featuring a spherical head of 25 mm diameter.

**Table 5**

| Experimental subject | Impact layer 3 | Base Layer 1 | Energy-absorbing layer 2 | Battery protection plate 100 |
|---|---|---|---|---|
| Material | Polyurea | HS1300 hot-formed steel | Ultra-high molecular weight polyethylene | |
| Thickness | 1.5 mm | 0.8 mm | 1 mm | |
| Impact energy | Less than 50 J | 250J | Less than 50 J | 550J and above |

**Table 6**

| Experimental subject | Impact layer 3 | Base layer 1 | Energy-absorbing layer 2 | Battery protection plate 100 |
|---|---|---|---|---|
| Material | Polyurea | HS1800 hot- | Ultra-high | |
| | | formed steel | molecular weight polyethylene | |
| Thickness | 2mm | 1mm | 1mm | |
| Impact energy | Less than 50 J | 350J | Less than 50 J | 700J and above |

As can be seen from Table 5 and Table 6, the impact resistance of the battery protection plate 100 provided in the examples of the present invention is significantly higher than the sum of the individual impact resistances of the base layer 1, the energy-absorbing layer 2, and the impact layer 3. It is evident that through the matching of the action mechanisms of the base layer 1, the energy-absorbing layer 2, and the impact layer 3, the battery protection plate 100 provided in the present invention can fully leverage the mechanical properties of each layer, thus enhancing the impact resistance of the battery protection plate 100.

For example, the base layer 1 can be integrally stamped and formed using hot-formed steel. The impact layer 3 can be coated onto the base layer 1. For example, polyurea can be sprayed onto the base layer 1 to form the impact layer 3. The energy-absorbing layer 2 can be attached to the base layer 1 through adhesive bonding followed by hot pressing. For example, ultra-high molecular weight polyethylene can be fixed onto the base layer 1 using adhesive bonding and then subjected to hot pressing to form the energy-absorbing layer 2. For example, the energy-absorbing layer 2 is first formed on the base layer 1 through adhesive bonding and hot pressing, and then polyurea is sprayed onto the opposite side of the energy-absorbing layer 2 on the base layer 1 to form the impact layer 3.

In an example, with reference to the cross-sectional exploded schematic diagram of the battery protection plate 100 shown in FIG. 4, the base layer 1 has a body portion 11 and a flange portion 12 located at an outer periphery of the body portion 11 and bent to the energy-absorbing layer 2, where an attachment area of the energy-absorbing layer 2 on the base layer 1 is within the range of the body portion 11.

The battery protection plate 100 is typically installed at the bottom of the battery pack. In some examples, the entire edge of the battery protection plate 100 is bent away from the ground direction, and connecting bolts are installed in the bent area to integrate the battery protection plate 100 with the battery pack case, forming a battery cell accommodation space for housing the battery cell. This arrangement prevents the bolt heads of the connecting bolts, which would otherwise be exposed at the bottom of the battery protection plate 100, from becoming the lowest point of the battery pack and potentially getting damaged or loosened due to impacts during vehicle operation.

In related art, the base material of the battery protection plate may be a steel plate. The steel plate is molded together with glass fiber reinforced plastic to form the battery protection plate. In order to safeguard the molding with the glass fiber reinforced plastic, the base steel plate must be flat. Consequently, the base steel plate typically does not include any bent portions. As a result, the high-strength base steel plate within the battery protection plate can only provide protection for the battery cell area, while the areas of the battery protection plate that lack the base steel plate exhibit poorer impact resistance.

In an example of the present invention, the base layer 1 has a body portion 11, which can protect the battery cell area, and a flange portion 12, which can protect the edge area, i.e., the base layer 1 can protect the entire battery bottom, endowing the battery protection plate 100 of the present invention with stronger protective capability.

The energy-absorbing layer 2 can be attached to the body portion 11. For example, ultra-high molecular weight polyethylene can be fixed onto the inner side of the body portion 11 using adhesive bonding, followed by hot pressing to form the energy-absorbing layer 2.

For example, the energy-absorbing layer 2 can also be attached to the body portion 11 and at least part of the flange portion 12. For example, the edge of the energy-absorbing layer 2 coincides with the edge of the base layer 1.

In an example of the present invention, an attachment area of the impact layer 3 on the base layer 1 is located at least at the body portion 11 and at the flange portion 12. For example, polyurea can be sprayed onto the base layer 1 to form the impact layer 3, with the edge of the impact layer 3 coinciding with the edge of the base layer 1.

According to another aspect of the present invention, a battery pack is provided. As shown in FIG. 5, the battery pack includes the battery protection plate 100 according to any one of the foregoing. The battery pack may further include a battery cell and a battery pack case 200. The battery protection plate 100 may be attached to a bottom of the battery pack case 200 to form a battery cell accommodation space in which the battery cell is installed. An upper cover 300 is installed on the battery pack case 200 to close the battery cell accommodation space. Since the technical solution provided by the present invention is advantageous in enhancing the impact resistance of the battery protection plate 100, the battery pack provided by the present invention has the beneficial effect of higher safety.

The present invention also provides a vehicle including the battery pack according to any one of the foregoing. In particular, the vehicle may be a battery electric vehicle, a hybrid vehicle, or the like, and the battery pack of the present invention may provide power output for the vehicle and ensure the driving safety of the vehicle. The vehicle may also include a vehicle body, an instrument panel, electronic and electrical equipment, etc., which are not enumerated here.

## Claims

1. A battery protection plate (100), comprising:
a base layer (1); and
an energy-absorbing layer (2) arranged on a side of the base layer (1);
wherein a tensile strength and an elastic modulus of the base layer (1) are greater than a tensile strength and an elastic modulus of the energy-absorbing layer (2), and an elongation at break of the energy-absorbing layer (2) is greater than an elongation at break of the base layer (1).

2. The battery protection plate (100) according to claim 1, wherein the battery protection plate (100) satisfies at least one of:
the tensile strength of the base layer (1) is at least 100 MPa;
the elongation at break L1 of the energy-absorbing layer (2) is at least 30%; or
a ratio of the tensile strength of the base layer (1) to the elongation at break of the energy-absorbing layer (2) satisfies: 0.16 MPa/% ≤ Q1/L1 ≤ 100 MPa/%, where Q1 represents the tensile strength of the base layer (1), L1 represents the elongation at break of the energy-absorbing layer (2), and Q1/L1 represents the ratio.

3. The battery protection plate (100) according to claim 1 or 2, wherein the battery protection plate (100) satisfies at least one of:
a ratio of a thickness of the base layer (1) to a thickness of the energy-absorbing layer (2) satisfies: 0.25 < H1/H2 < 6;
the thickness of the base layer (1) ranges from 0.6 mm to 2 mm; or
the thickness of the energy-absorbing layer (2) ranges from 0.5 mm to 3 mm,
where H1 represents the thickness of the base layer (1), H2 represents the thickness of the energy-absorbing layer (2), and H1/H2 represents the ratio.

4. The battery protection plate (100) according to any one of claims 1-3, wherein a Rockwell hardness of the base layer (1) is at least 25 HRC.

5. The battery protection plate (100) according to any one of claims 1-4, wherein the battery protection plate (100) satisfies at least one of:
the base layer (1) comprises metal; or
the energy-absorbing layer (2) comprises ultra-high molecular weight polyethylene.

6. The battery protection plate (100) according to any one of claims 1-5, further comprising an impact layer (3), wherein the impact layer (3) is arranged on a side of the base layer (1) away from the energy-absorbing layer (2), wherein a compressive strain rate of the impact layer (3) is greater than a compressive strain rate of the base layer (1) and is greater than a compressive strain rate of the energy-absorbing layer (2).

7. The battery protection plate (100) according to claim 6, wherein a ratio of the compressive strain rate of the impact layer (3) to a thickness of the impact layer (3) satisfies: 66 (mm*s)^-1 ≤ V1/H3 ≤ 10000 (mm*s)^-1; or
the compressive strain rate of the impact layer (3) is at least 200 s^-1,
where V1 represents the compressive strain rate of the impact layer (3), H3 represents the thickness of the impact layer (3), and V1/H3 represents the ratio.

8. The battery protection plate (100) according to claim 6 or 7, wherein a ratio of a Rockwell hardness of the base layer (1) to an adhesion strength between the base layer (1) and the impact layer (3) satisfies: 1 HRC/MPa ≤ Y1/Q2 ≤ 57 HRC/MPa, where Y1 represents the Rockwell hardness of the base layer (1), Q2 represents the adhesion strength between the base layer (1) and the impact layer (3), and Y1/Q2 represents the ratio..

9. The battery protection plate (100) according to any one of claims 6-8, wherein a product of a thickness of the impact layer (3) and a thickness of the base layer (1) satisfies: 0.3 mm^2 ≤ H3*H2 ≤ 6 mm^2, wherein H3 represents the thickness of the impact layer (3), H2 represents the thickness of the base layer (1), and H3*H2 represents the product.

10. The battery protection plate (100) according to any one of claims 6-9, wherein the battery protection plate satisfies at least one of:
a thickness of the impact layer (3) ranges from 0.5 mm to 3 mm; or
an adhesion strength between the base layer (1) and the impact layer (3) is at least 3 MPa.

11. The battery protection plate (100) according to any one of claims 6-10, wherein the impact layer (3) comprises a polyurea material.

12. The battery protection plate (100) according to any one of claims 6-11, wherein the base layer (1) has a body portion (11) and a flange portion (12) located at an outer periphery of the body portion (11) and bent to the energy-absorbing layer (2), wherein an attachment area of the impact layer (3) on the base layer (1) is located at least at the body portion (11) and at the flange portion (12).

13. The battery protection plate (100) according to any one of claims 1-11, wherein the base layer (1) has a body portion (11) and a flange portion (12) located at an outer periphery of the body portion (11) and bent to the energy-absorbing layer (2), wherein the flange portion (12) is configured to connect with a battery pack case, wherein an attachment area of the energy-absorbing layer (2) on the base layer (1) is within the range of the body portion (11).

14. A battery pack, comprising:
the battery protection plate (100) according to any one of claims 1 to 13, the energy-absorbing layer (2) being located on a side of the base layer (1) facing the interior of the battery pack.

15. A vehicle, comprising the battery pack according to claim 14.
